# EUROPEAN PATENT APPLICATION

(11) **EP 2 033 695 A2**
(43) Date of publication of application: **11.03.2009**
(21) Application number: 08163795.1
(22) Date of filing: 05.09.2008
(51) Int. Cl.: A63F 9/10, A63F 9/24, G06F 3/147

(54) **Radio frequency (RF) sensing system, RF display device, and puzzle system using the same**

(30) Priority: 06.09.2007 US 970362 P
(71) Applicant: G-Time Electronic Co., Ltd., Siangshan District Hsinchu City 300 (TW)
(72) Inventor: Hou, Tien-Fa, 300 Hsinchu City (TW); Wu, Che-Ming, 423 Taichung (TW)
(74) Representative: Rühland, Hans Constantin

(57) **Abstract**

This invention discloses a RF sensing system, a RF display device and a puzzle system using the same. The RF sensing system includes a platform, at least one RF reader and a RF display device. The RF reader is installed at the platform for generating a radio signal. The RF display device includes a display panel and a flat panel. If the RF display device receives the radio signal, the display panel can change a display state. The flat panel has a text or an image. If the display panel is at an opaque state, at least a portion of the text or the image is blocked by the display panel. If the display panel is at a transparent state, the text or the image is exposed. If the flat panel has a puzzle pattern, several RF display devices can be used for forming a puzzle.

## Description

### BACKGROUND OF THE INVENTION

### Field of the Invention

The present invention relates to a radio frequency (RF) sensing system, a RF display device and a puzzle system using the RF sensing system and the RF display device, and more particularly to a technical area of generating electric power to drive a display panel to change its display state via a wireless method.

### Description of the Related Art

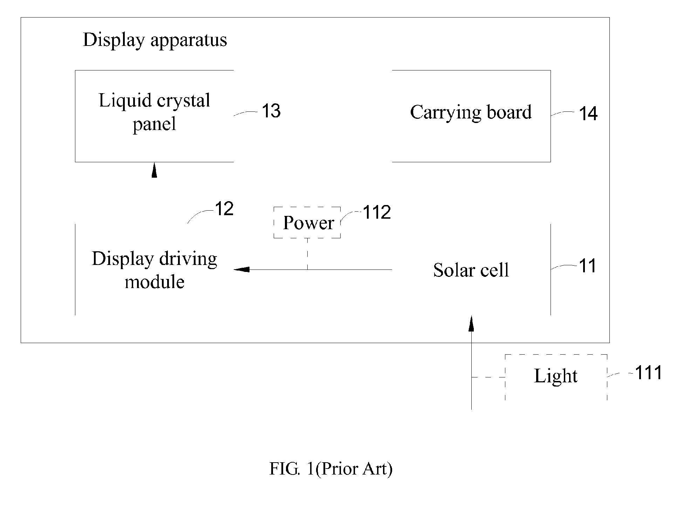

With reference to FIG. 1 for a block diagram of a conventional display apparatus, the display apparatus includes a solar cell 11, a display driving module 12, a liquid crystal panel 13 and a carrying board 14.

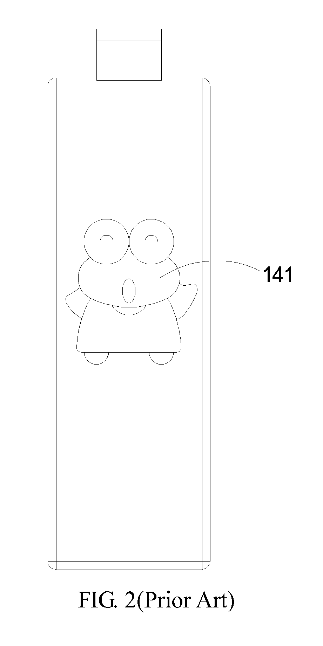

With reference to FIG. 2 for a perspective view of a second prior art, the solar cell 11 receives a light source 111 to output a power 112, and the display driving module 12 receives the power 112 to drive the liquid crystal arrangement of the liquid crystal panel 13 to change a display state, such as changing from an opaque state to a transparent state, or from a transparent state to an opaque state.

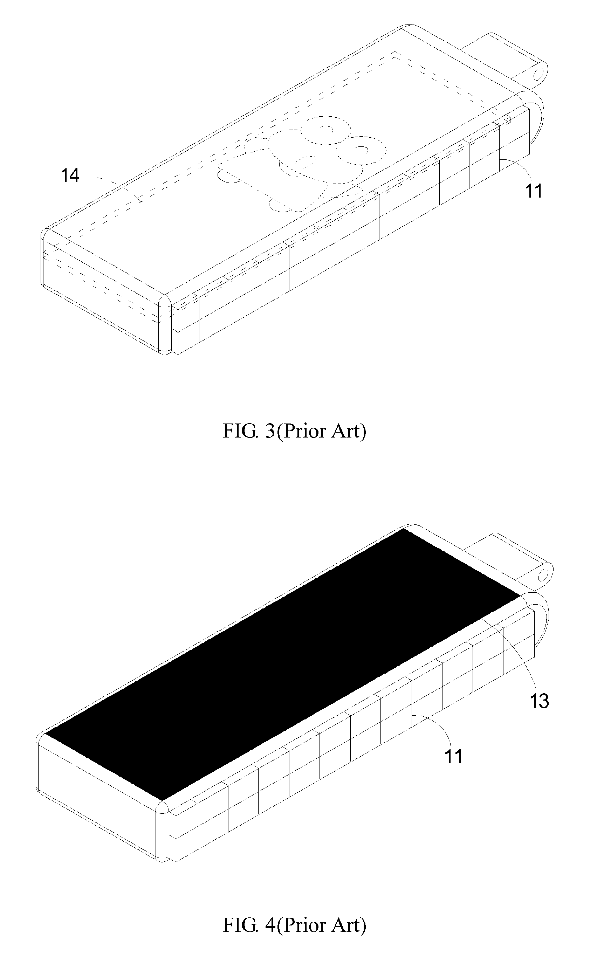

With reference to FIGS. 3 and 4 for a second perspective view and a third perspective view of the prior art respectively, the carrying board 14 has an image 141, such that if the display panel 13 is at the opaque state, the image 141 is blocked by the liquid crystal panel 13. If the liquid crystal panel 13 is at the transparent state, the image 141 is exposed.

Since the display apparatus of this sort can give a display effect by projecting a light source, the display apparatus can be used for objects such as decoration or key chain only, but it cannot be used for a more complicated application such as a system that have interactions with users.

### Summary of the Invention

It is a primary objective of the present invention to overcome the shortcomings of the prior art that can use a light source to change a display state of a display panel only and cannot be used in other application areas by providing a RF induced system, a RF display device, and a puzzle system using the RF induced system and the RF display device.

To achieve the foregoing objective, the present invention provides a RF sensing system comprising a platform, at least one RF reader and at least one RF display device. The RF reader is installed at the platform for generating a radio signal. The RF display device comprises a RF receiver-transmitter antenna, a power receiving module, a display panel and a display driving module. The RF receiver-transmitter antenna is used for receiving the radio signal, and the power receiving module generates an induced power according to the radio signal, and the display driving module receives the power to drive the display panel to change a display state.

The RF display device further comprises a flat panel having a text or an image, such that if the display panel is at an opaque state, at least a portion of a text or an image is blocked by the display panel, and if the display panel is at a transparent state, the text or image is exposed.

The present invention further provides a RF display device comprising a RF receiver-transmitter antenna, a power receiving module, a display panel and a display driving module. The RF receiver-transmitter antenna receives a radio signal, and the power receiving module generates an induced power according to the radio signal. The display driving module receives the power to drive the display panel to change a display state.

The display panel includes a plurality of pixels, and a display driving module for controlling a status of pixels for displaying an image.

A further objective of the present invention is to provide a puzzle system comprising a plurality of puzzle pieces, a puzzle platform, a plurality of RF readers, a storage device and a processing device. Each puzzle piece includes a RFID module, a display panel and a display driving module, and RFID module is provided for storing an identification code. The puzzle platform is provided for placing the puzzle pieces. The RF readers are installed at the puzzle platform, and each RF reader is provided for emitting a radio signal to read the identification code. The storage device is installed at the puzzle platform for recording a correspondence data of the identification code and the RF reader. The processing device is installed at the puzzle platform for receiving the identification code read by each RF reader, and determining whether or not each RF reader is matched with the identification code read by the RF reader according to the correspondence data; if yes, then the processing device controls the matched RF reader to continue emitting a radio signal. If the RFID module of the puzzle piece receives a radio signal, the RFID module generates a power which is then provided to the display driving module, such that the display driving module drives the display panel to change a display state to allow the puzzle piece to expose a puzzle image.

If the processing device determines that the RF reader is not matched with the identification code read by the RF reader, the processing device controls the RF reader to stop emitting the radio signal,and emitts radio signal to read the radio signal to read the RF reader until next time. By repeating the above procedure, the puzzle system can work functionally.

In summation of the description above, the RF sensing system, the RF sensing and display apparatus and the puzzle system using the RF sensing and display apparatus have the following advantages:
(1) Electric power is generated by a wireless induced method to change a display state of a display panel for displaying or not displaying a text or an image on a flat panel, so as to provide an effect of displaying the text or image according to different operating statuses.
(2) The display driving module is provided for controlling a plurality of pixels to display an image, and thus animation can be used for displaying information.
(3) An identification code stored in a RF display device and a communication with a RF reader can be used for changing the display information of a display panel.

### BRIEF DESCRIPTION OF THE DRAWINGS

The subject matter regarded as the invention is particularly pointed out and distinctly claimed in the concluding portion of the specification. The invention together with features and advantages thereof may best be understood by reference to the following detailed description with the accompanying drawings in which:
FIG. 1 is a schematic view of a RFID display apparatus in prior art;
FIG. 2 is a first perspective view of a RFID display apparatus in prior art;
FIG. 3 is a second perspective view of a RFID display apparatus in prior art;
FIG. 4 is a third perspective view of a RFID display apparatus in prior art;
FIG. 5 is a block diagram of a RF sensing system of the present invention;
FIG. 6 is a block diagram of a RF sensing system in accordance with a first preferred embodiment of the present invention;
FIG. 7 is a schematic view of a structure of a RF sensing system in accordance with a first preferred embodiment of the present invention;
FIG. 8 is a first schematic view of a RF sensing system in accordance with a first preferred embodiment of the present invention;
FIG. 9 is a second schematic view of a RF sensing system in accordance with a first preferred embodiment of the present invention;
FIG. 10 is a block diagram of a RF display device in accordance with a second preferred embodiment of the present invention;
FIG. 11 is a first schematic view of a RF display device of the present invention;
FIG. 12 is a second schematic view of a RF display device of the present invention;
FIG. 13 is a block diagram of a RF display device in accordance with a third preferred embodiment of the present invention;
FIG. 14 is a schematic view of a RF display device in accordance with a third preferred embodiment of the present invention;
FIG. 15 is a block diagram of a RF display device in accordance with a fourth preferred embodiment of the present invention;
FIG. 16 is a first schematic view of a RF sensing system in accordance with a fourth preferred embodiment of the present invention;
FIG. 17 is a second schematic view of a RF sensing system in accordance with a fourth preferred embodiment of the present invention; and
FIG. 18 is a block diagram of a puzzle system in accordance with a fifth preferred embodiment of the present invention.

### DETAILED DESCRIPTION OF THE PREFERRED EMBODIMENTS

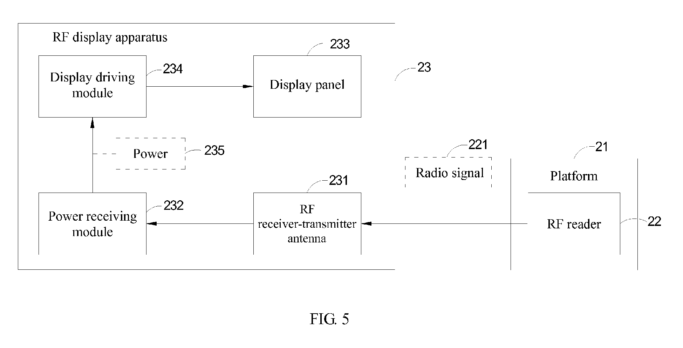

With reference to FIG. 5 for a block diagram of a RF sensing system of the present invention, the RF sensing system comprises a platform 21, a RF reader 22 and a RF display device 23.

The RF reader 22 is installed on the platform 21 for generating a radio signal 221, and receiving an identification code of the RF display device 23 or transmitting related information to change an identification code or a display content of the RF display device 23, when needed. The RF display device 23 includes a RF receiver-transmitter antenna 231, a power receiving module 232, a display panel 233 and a display driving module 234. The RF receiver-transmitter antenna 231 is provided for receiving the radio signal 221. The power receiving module 232 is provided for producing an electromagnetic induction according to the radio signal 221, and outputting a power 235. After the display driving module 234 receives the power 235, the display driving module 234 drives the display panel 233 to change a display state. When the RF display device 23 has received a radio signal 221 or has not received a radio signal 221, the display panel 233 is situated at different display states respectively.

Preferably, the display panel 233 is a liquid crystal panel capable of changing the direction of aligning liquid crystal molecules according to the inputted voltage value, such that the display state of the display panel include an opaque state and a transparent state. If the display panel 233 is a power-consuming panel, then the power 235 generated by the power receiving module 232 can be supplied to the display panel 233.

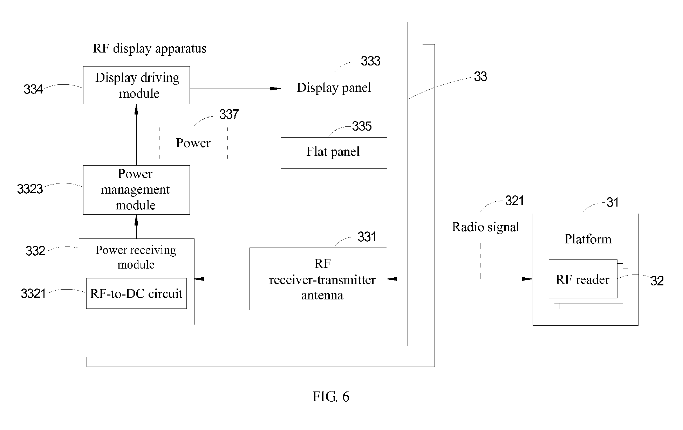

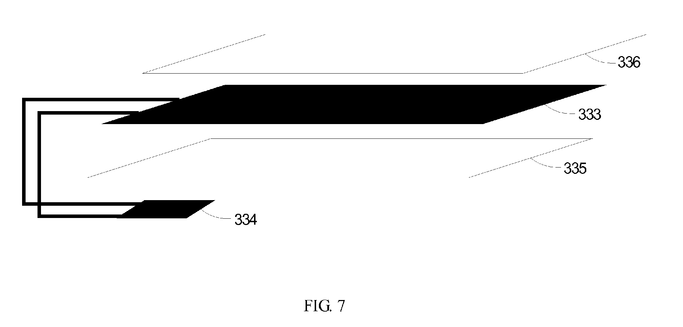

With reference to FIGs. 6 and 7 for a block diagram of a RF sensing system and a schematic view of a structure of a RF sensing system in accordance with a first preferred embodiment of the present invention respectively, the RF sensing system comprises a platform 31, a plurality of RF readers 32 and a plurality of RF display devices 33.

The RF reader 32 generates a radio signal 321. Each RF display device 33 comprises a RF receiver-transmitter antenna 331, a power receiving module 332, a power management module 3323, a display panel 333, a display driving module 334, a flat panel 335 and a transparent panel 336.

The RF receiver-transmitter antenna 331 is used for receiving the radio signal 321, and the power receiving module 332 includes a RF-to-DC circuit 3321 for converting the radio signal 321 into a DC power 337. Since different components may need power with different voltages, therefore the power management module 3323 is used for generating a plurality of power 337 with different voltage values. It is noteworthy to point out that the power 337 is used for representing the powers of all voltage values (for the purpose of facilitating the description of the invention). The power management module 3323 can include a plurality of voltage regulators or a plurality of DC-to-DC circuit.

The display driving module 334 receives the power 337 for driving and controlling the display panel 333. The display panel 333 is installed between the transparent panel 336 and the flat panel 335, and at least a portion of the flat panel 335 is blocked. If the display panel 333 changes the direction of aligning liquid crystal molecules according to the control signal of the display driving module 334, the display state is changed from an opaque state to a transparent state, such that a pattern on the flat panel 335 can be exposed. If the display state of the display panel 333 is an opaque state, the display panel 333 will block the pattern on the flat panel 335.

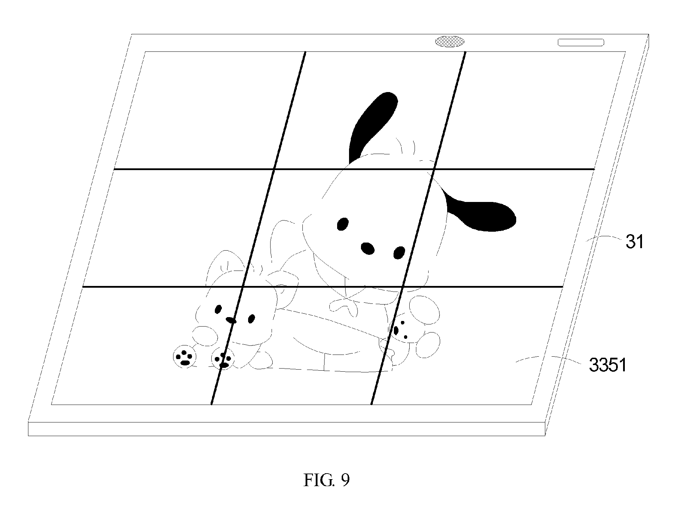

With reference to FIGs. 6, 8 and 9, FIGS. 8 and 9 are first and second schematic views of a RF sensing system in accordance with a first preferred embodiment of the present invention respectively. If a RF display device 33 is installed at the top of a corresponding RF reader 32, and the display panel 333 is changed from an opaque state to a transparent state, an image 3351 situated at the flat panel 335 can be exposed, wherein the image of the flat panel 335 an be a puzzle image, and the platform 31 can be a puzzle platform.

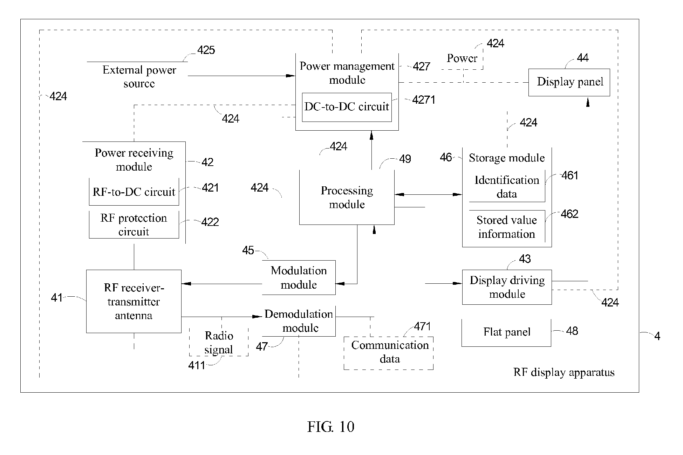

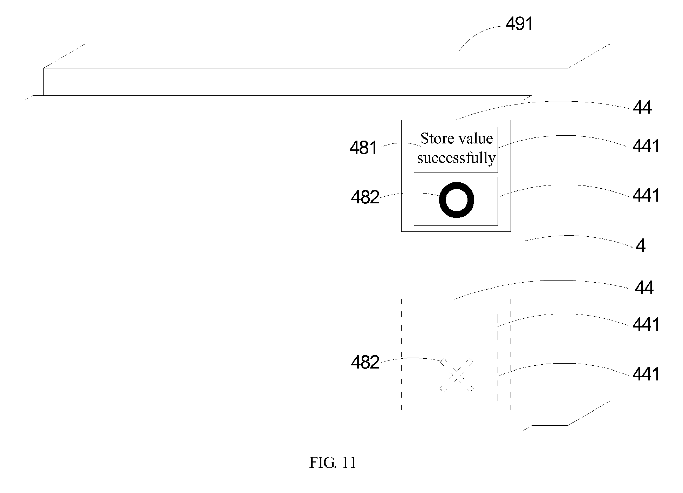

With reference to FIGs. 10 and 11 for a block diagram and a first schematic view of a RF display device in accordance with a second preferred embodiment of the present invention, the RF display device 4 comprises a RF receiver-transmitter antenna 41, a power receiving module 42, a display driving module 43, a display panel 44, a modulation module 45, a storage module 46, a demodulation module 47, a flat panel 48 and a processing module 49, and the power receiving module 42 includes a RF-to-DC circuit 421, a RF protection circuit 422. The functions of the power receiving module 42, the display driving module 43 and the display panel 44 are the same as those of the first preferred embodiment, and thus will not be described here again.

The power receiving module 42 supplies power 424 to the modulation module 45, the storage module 46, the demodulation module 47, the display driving module 43 and the display panel 44. The storage module 46 stores an identification data 461, and the modulation module 45 is used for modulating the identification data 461, and sending out the modulated identification data 461 through the RF receiver-transmitter antenna 41 by wireless transmissions. The demodulation module 47 demodulates the radio signal 411 received from the RF receiver-transmitter antenna 41 to generate and transmit a communication data 471 to the processing module 49, and the processing module 49 transmits the communication data 471 to the display driving module 43, so that the display driving module 43 can control the display state of the display panel 44 according to the communication data 471. In this preferred embodiment, the display panel 44 can be divided into a plurality of display areas 441, and the RF sensing and display apparatus 4 can be a stored value card, but the invention is not limited to such arrangement only, and the RF receiver-transmitter antenna 41, the power receiving module 42, the modulation module 45, the storage module 46 and the demodulation module 47 can be radio frequency identification (RFID) modules, and the RF display device 4 can be a puzzle piece.

If the RF sensing and display apparatus 4 is a stored value card (such as an Easy Go Card or an E-purse), the storage module 46 can store a stored value information 462, such that when the stored value card stores a value, the processing module 49 can access the stored value information 462 according to the communication data 471 to complete storing the value.

For different applications of the RF display device 4, the apparatus can further comprise a power management module 427 and an external power source 425, and the power management module 427 is mainly used for processing the induced power 424. For example, if the storage module 46 stores a communication data 471 demodulated by the demodulation module 47, the processing module 49 will transmit the communication data 471 to a plurality of input terminals of the storage module 46. When a general storage module 46 writes data, a power with a higher voltage is needed for writing in the data, it is necessary for processing module 49 to control the power management module 427, so that the DC-to-DC circuit 4271 converts the power into different voltage values to fit the power 424 required by the storage module 46 to write data, or supplies an appropriate working power 424 to the display panel 44, the display driving module 43, the processing module 49, the modulation module 45 and the demodulation module 47. For simplicity, powers with different voltage values are represented by the power 424 in the figure. As the display panel 44 tends to be a color panel or the sensing distance tends to be larger, the induced power 424 is insufficient for the required power, and an external power source 425 such as a battery is required to operate together with the RF display device, and the power management module 427 receives a control from the processing module 49 to supply sufficient power to the display panel 44. The same idea can be applied to an active RF sensing system with an existing external power source.

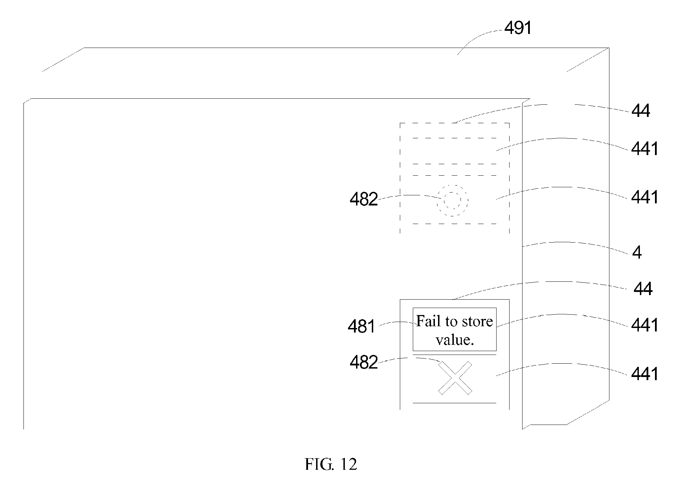

With reference to FIGs. 10 to 12, FIG. 12 is a second schematic view of a RF display device in accordance with a second preferred embodiment of the present invention. If a value is stored into the RF display device 4 (Easy Go Card), a nearby RF reading apparatus 491 having a RF reader (not shown in the figure) is used. Now, the radio signal 411 generated by the RF reading apparatus 491 is received by the RF receiver-transmitter antenna 41, and the power receiving module 42 converts the radio signal 411 into a power 424, and modulation module 45 reads an identification data 461 through the processing module 49, and modulates the identification data 461 into a modulated signal, and the RF receiver-transmitter antenna 41 transmits the modulated signal to the RF reading apparatus 491, such that the RF reading apparatus 491 can identify the RF display device 4. If the value is stored successfully, then the RF reading apparatus 491 will send a radio signal 411 including a successful value storage information to the RF display device 4. After the demodulation module 47 analyzes a communication data 471 of the successful value storage information from the radio signal 411, the digital processing module 49 processes and sends the communication data 471 to the display driving module 43. Now, the processing module 49 accesses the stored value information 462 according to the communication data 471 to complete storing the value, and a display area 441 of the display panel 44 disposed on the flat panel 48 for displaying the corresponding text and image of the successful value storage is changed from an opaque state to a transparent state, such that the corresponding text and image of the successful value storage no longer be blocked by the display panel 44, but the text and image can be exposed to inform users about the successful value storage. If it fails to store the value, the RF reading apparatus 491 then transmit a radio signal 411 including a failed value storage information. Similarly, the display area 441 on the flat panel 48 and corresponding to a text and an image of the failed value storage is converted from an opaque state to a transparent state to expose the text 481 and the image 482 of the corresponding failed value storage as described in the foregoing procedure.

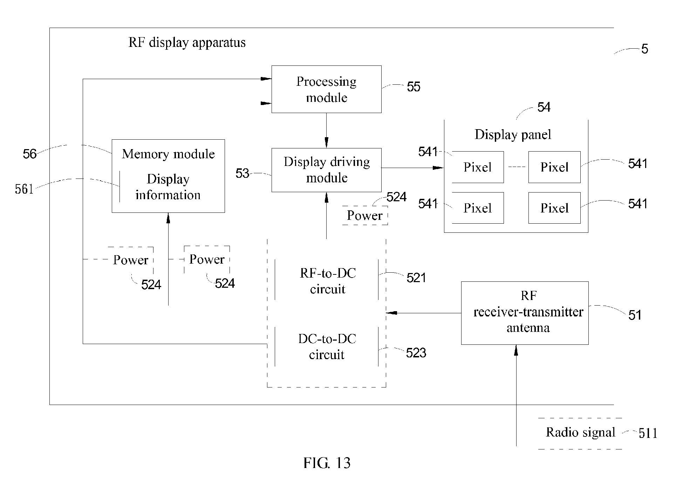

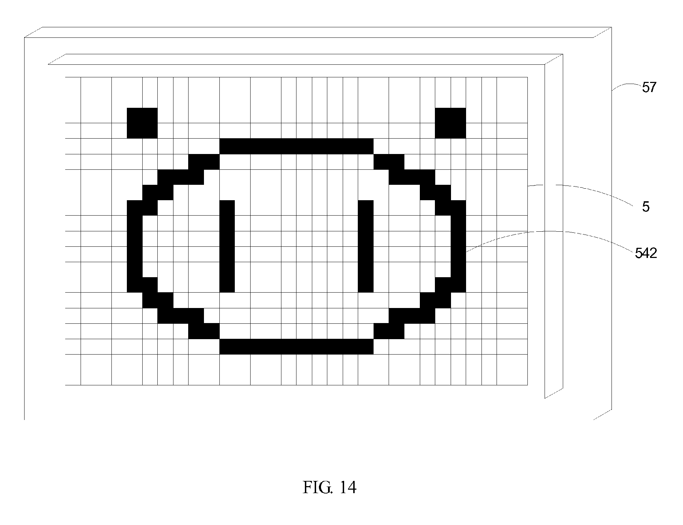

With reference to FIGs. 13 and 14 for a block diagram and a schematic view of a RF display device in accordance with a third preferred embodiment of the present invention, the RF display device 5 comprises a RF receiver-transmitter antenna 51, a display driving module 53, a display panel 54, a processing module 55, a memory module 56, a RF-to-DC circuit 521 and a DC-to-DC circuit 523. In this preferred embodiment, a RF receiver-transmitter antenna 51, a RF-to-DC circuit 521, a DC-to-DC circuit 523 and a display driving module 53 are the same as those in the first preferred embodiment, and thus will not be described here again. In this preferred embodiment, the effect of the RF-to-DC circuit 521 is the same as that of the power receiving module of the first preferred embodiment, and the effect of the DC-to-DC circuit 523 is the same as that of the power management module of the first preferred embodiment. For simplicity, related circuits for receiving and converting electric power are integrated as shown in FIG. 13.

When the RF display device 5 is near a sensing and reading device 57 having a RF reader (not shown in the figure), the power receiving module will convert the radio signal 511 into a power 524 which is then provided to the processing module 55 and the memory module 56. The display panel 54 includes a plurality of pixels 541 arranged in an array, and the display driving module 53 is sued for driving each pixel 541 and converting the pixels into a transparent state or an opaque state. The memory module 56 stores a plurality of display information 561, and the processing module 55 reads a display information 561 and drives the display driving module 53 to control each pixel 541 to be changed to a transparent state or an opaque state for displaying an image 542 corresponding to the display information 561. The processing module 55 can read different display information 561 within a specific time period, so that the display panel 54 can display images 542 corresponding to different display information in a specific time period. If the time period is shortened, then the images 542 can be shown in an animation form.

For different applications of the RF display device 5, the RF display device 5 can further comprises a power management module (not shown in the figure) and an external power source (not shown in the figure) for supplying an appropriate power to the power-consuming modules or a color display panel that consumes more power and increasing the sensing distance. The details are the same as those of the second preferred embodiment, and thus will not be described here again.

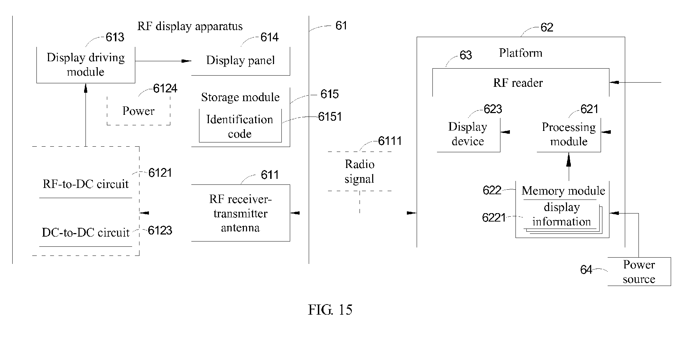

With reference to FIG. 15 for a block diagram of a RF sensing system in accordance with a fourth preferred embodiment of the present invention, the RF sensing system comprises a RF display device 61, a platform 62 and a RF reader 63. The RF display device 61 comprises a RF receiver-transmitter antenna 611, a display driving module 613, a display panel 614, a storage module 615, a RF-to-DC circuit 6121 and a DC-to-DC circuit 6123. The platform 62 comprises a processing module 621, a memory module 622 and a display device 623. The functions of the RF receiver-transmitter antenna 611, the RF-to-DC circuit 6121, the DC-to-DC circuit 6123, the display driving module 613, the display panel 614, the RF reader 63 and the platform 62 are the same as those of the first preferred embodiment, and thus will not be described here again.

For different applications of the RF display device 5, the RF display device 5 further comprises a power management module (not shown in the figure) and an external power source (not shown in the figure), for supplying an appropriate power to the power-consuming modules or a color display panel that consumes more power and increasing the sensing distance. The details are the same as those of the second preferred embodiment, and thus will not be described here again.

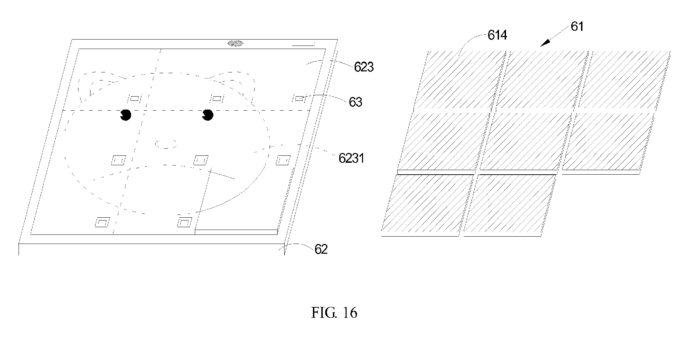

The processing module 621 and the memory module 622 are electrically connected to a power source 64. The storage module 615 stores an identification code 6151, and the memory module 622 stores a plurality of display information 6221, and the processing module 621 reads the display information 6221 and the identification code 6151, such that the display device 623 displays an image 6231 of the corresponding display information 6221 as shown in FIG. 16.

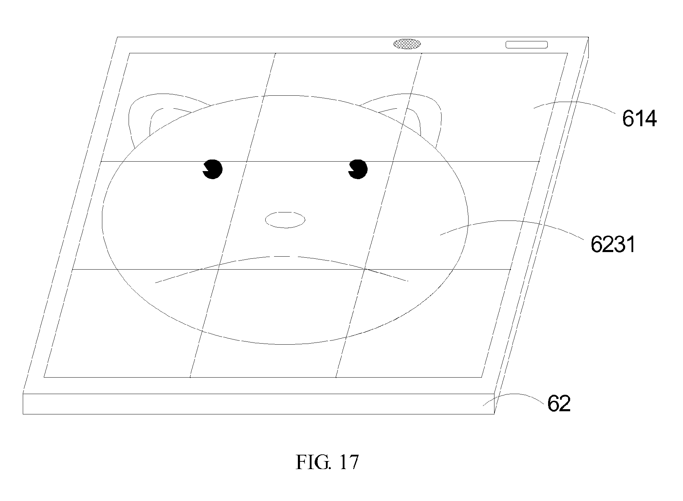

With reference to FIGs. 15 to 17, FIGs. 16 and 17 are first and second schematic views of a RF sensing system in accordance with a fourth preferred embodiment of the present invention respectively. When the RF display device 61 is installed on a corresponding RF reader 63, the processing module 621 situated in the platform 62 reads the corresponding identification code 6151 to determine the corresponding position of the RF display device 61 on the platform 62, and drive the RF reader 63 to emit a radio signal 6111. The RF-to-DC circuit 6121 and the DC-to-DC circuit 6123 converts the radio signal 6111 generated by the RF reader 63 into a power 6124. The display driving module 613 receives the power 6124 to drive display panel 614 to change from an opaque state to a transparent state, and thus the display content of the display device 623 is not blocked by the display panel 614, but can be exposed. The display content of the display device 623 can be different display information 6221 read by the processing module 621, and thus different display contents can be displayed.

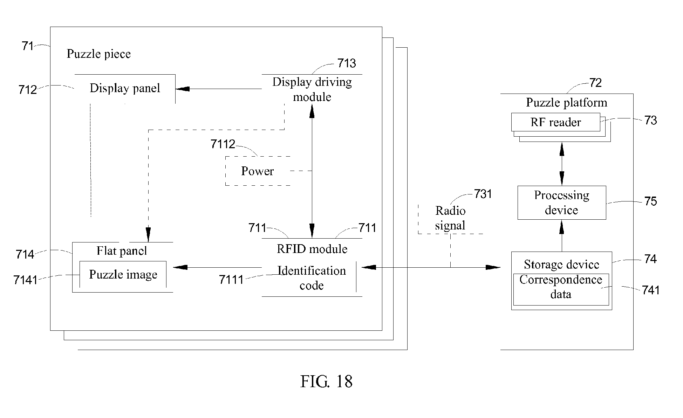

With reference to FIG. 18 for a block diagram of a puzzle system in accordance with a fifth preferred embodiment of the present invention, the puzzle system comprises a plurality of puzzle pieces 71, a puzzle platform 72, a plurality of RF readers 73, a storage device 74 and a processing device 75. Each puzzle piece 71 comprises a RFID module 711, a display panel 712 and a display driving module 713, and the RFID module 711 stores an identification code 7111. The puzzle platform 72 is provided for placing the puzzle pieces 71. The RF readers 73 are installed at the puzzle platform 72 and arranged in an array for emitting a radio signal 731 to read an identification code 7111. The storage device 74 is installed at the puzzle platform 72 for recording a correspondence data 741 of the identification code 7111 and the RF reader 73.

The processing device 75 is installed at the puzzle platform 72 for scanning the identification code 7111 of each RFID module 711, and determining whether or not each RF reader 73 is matched with the identification code 7111 read by the RF reader 73 according to the correspondence data 741; if yes, then the processing device 75 controls the matched RF reader 73 to continue emitting a radio signal 731. If the RFID module 711 of the puzzle piece 71 receives the radio signal 731, then the RFID module 711 will generate a power 7112 which is then provided to the display driving module 713, so that the display driving module 713 drives the display panel 712 to changed a display state for displaying the puzzle image. If the processing device 75 determines that the RF reader 73 is not matched with the identification code 7111 read by the RF reader 73, the processing device 75 will control the RF reader 73 to stop emitting a radio signal 731 till the next scanning cycle of the reader 73, and then the identification code 7111 of the puzzle piece 71 is determined again to see whether or not it is matched, and these steps are repeated until the whole puzzle is completed, so as to play a puzzle game.

The puzzle piece 71 can come with a flat panel 714 having a puzzle image 7141, if needed. If the puzzle piece 71 has not received the radio signal 731, the display panel 712 is not driven by the display driving module 713 and thus it maintains its opaque state, and the puzzle image 7141 is blocked. If the puzzle piece 71 has received the radio signal 731, the display driving module 713 drives the display panel 712 to a transparent state, and thus the puzzle image 7141 is not blocked by the display panel 712, and the puzzle image 7141 can be exposed. If a puzzle piece 71 on the puzzle platform 72 is determined to be situated on the puzzle platform 72 by means of the identification code 7111, then all puzzle images 7141 on the flat panel 714 can be displayed to complete a whole puzzle image, so that the puzzle pieces 71 can be placed for playing a puzzle game.

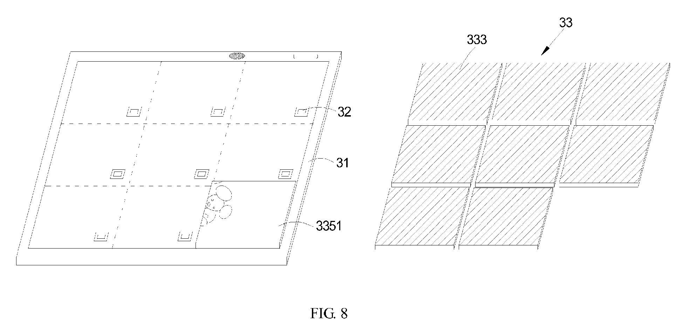

The display panel 712 may not install a flat panel 714 having a puzzle image 7141, but it includes a plurality of pixels (not shown in the figure) arranged in an array. If the puzzle piece 71 has received the radio signal 731, the display driving module 713 will control each pixel to change from a transparent state or an opaque state for displaying the puzzle image. Refer to FIGS. 8, 9 and 11 for schematic view of the implementation of this preferred embodiment.

In summation of the description above, the RF sensing system, the RF display device and the puzzle system using the same in accordance with the present invention change the display state of the display panel to display or not to display the text or image of the flat panel, so as to achieve the effect of displaying or not displaying the text or image according to different operating statuses.

The RF sensing system, the RF display device and the puzzle system using the same in accordance with the present invention also have another effect of displaying an image by controlling a plurality of pixels through the display driving module, so that information can be displayed in an animation form.

The RF sensing system, the RF display device and the puzzle system using the same in accordance with the present invention have a further effect of determining whether or not the identification code is matched with the correspondence data by the processing device, so as to determine whether or not the RF reader needs to emit a radio signal, or the RF module needs to generate and supply a power to the display driving module to change the display state for exposing a puzzle image of the puzzle pieces and playing a puzzle game.

## Claims

1. A radio frequency (RF) sensing system, comprising:
a platform;
at least one RF reader, installed at the platform, capable of generating a radio signal; and
at least one RF display device, including a RF receiver-transmitter antenna, a power receiving module, a display panel and a display driving module, and the RF receiver-transmitter antenna being provided for receiving the radio signal, and the power receiving module capable of outputting a power according to the radio signal, and the display driving module capable of driving the display panel to change display state after the display driving module receives the power.

2. The RF sensing system of claim 1, wherein the RF display device further includes a flat panel having a text or an image, and when the display panel is at an opaque state, at least a portion of the text or the image is blocked by the display panel, and when the display panel is at a transparent state, the text or the image is exposed.

3. The RF sensing system of claim 2, wherein the image of the flat panel of the RF display device is a puzzle image when the RF sensing system comprises a plurality of RF display devices.

4. The RF sensing system of claim 1, further comprising a display device installed on the platform, wherein the RF display device is installed on the display device, and when the display panel of the RF display device is at an opaque state, a display content of the display device is blocked by the RF display device, and when the display panel of the RF display device is at a transparent state, the display content of the display device is exposed.

5. The RF sensing system of claim 1, wherein the power receiving module includes a RF-to-DC circuit.

6. The RF sensing system of claim 1, wherein the RF display device further includes a power management module capable of generating different DC voltages.

7. A radio frequency (RF) display apparatus, comprising:
a RF receiver-transmitter antenna capable of receiving a radio signal;
a power receiving module capable of outputting a power according to the radio signal; a display panel; and
a display driving module capable of receiving the power to drive the display panel to change a display state.

8. The RF display device of claim 7, further comprising a modulation module and a storage module, wherein the storage module is capable of storing an identification data, and the modulation module is capable of reading and modulating the identification data, and transmitting the identification data by a wireless transmission through the RF receiver-transmitter antenna after the modulation module receives the power.

9. The RF display device of claim 7, further comprising a demodulation module capable of demodulating the radio signal to generate a communication data, and the display driving module controlling the display state of the display panel according to the communication data.

10. The RF display device of claim 7, wherein the display panel includes a plurality of pixels, and the display driving module controls a status of the pixels for displaying an image.

11. The RF display device of claim 7, further comprising a flat panel having a text or an image, and when the display panel is at an opaque state, at least a portion of the text or the image is blocked by the display panel, and when the display panel is at a transparent state, the text or the image is exposed.

12. The RF display device of claim 7, wherein the power receiving module comprises a RF-to-DC circuit.

13. The RF display device of claim 7, further comprising a power management module capable of generating different DC voltages.

14. A puzzle system, comprising:
a plurality of puzzle pieces, and each puzzle piece including a radio frequency identification (RFID) module, a display panel and a display driving module, and the RFID module being provided for storing an identification code;
a puzzle platform, for placing the puzzle pieces;
a plurality of RF readers, installed at the puzzle platform, and each RF reader emitting a radio signal for reading the identification code;
a storage device, installed at the puzzle platform, for recording a correspondence of data of the identification codes and the RF readers; and
a processing device, installed at the puzzle platform, capable of receiving the identification code read by each of the RF readers, and determining whether or not each of the RF readers is matched with the identification code read by the RF reader according to the correspondence data; if yes, then the processing device controls the matched RF reader to continue emitting a radio signal;
wherein, when the RFID module of the puzzle piece receives the radio signal, the RFID module generates a power which is provided to the display driving module, such that the display driving module drives the display panel to change a display state, and allow the puzzle piece to expose a puzzle image.

15. The puzzle system of claim 14, wherein the processing device controls the RF reader to stop emitting the radio signal if the processing device determines that the RF reader is not matched with the identification code read by the RF reader.

16. The puzzle system of claim 14, wherein the RF readers are arranged in an array and the processing device receives the identification code from the RF readers by scanning manner.

17. The puzzle system of claim 14, wherein the puzzle piece further includes a flat panel having the puzzle image, and when the puzzle piece has not received a radio signal, the display panel is at an opaque state to block the puzzle image, and when the puzzle piece receives a radio signal, the display driving module then drives the display panel to a transparent state to expose the puzzle image.

18. The puzzle system of claim 14, wherein the display panel includes a plurality of pixels, and the display driving module controls status of the pixels to display the puzzle image when the puzzle piece receives a radio signal.
